# EUROPEAN PATENT SPECIFICATION

(11) **EP 3 980 681 B1**
(45) Date of publication and mention of the grant of the patent: **20.05.2026**
(21) Application number: 19937475.2
(22) Date of filing: 08.11.2019
(51) Int. Cl.: F21K 9/20, F21V 5/04, F21V 9/40, G03B 15/03, F21V 5/00, F21Y 105/12, F21Y 115/10

(54) **LIGHTING DEVICE AND OPTICAL DEVICE HAVING THE SAME**
BELEUCHTUNGSVORRICHTUNG UND OPTISCHE VORRICHTUNG DAMIT
DISPOSITIF D'ÉCLAIRAGE ET DISPOSITIF OPTIQUE ÉQUIPÉ DE CE DERNIER

(30) Priority: 16.07.2019 CN 201910640192
(43) Date of publication of application: 13.04.2022
(73) Proprietor: Zhejiang Dahua Technology Co., Ltd., Hangzhou, Zhejiang 310053 (CN)
(72) Inventor: XU, Yinhui, Hangzhou, Zhejiang 310053 (CN); DING, Naiying, Hangzhou, Zhejiang 310053 (CN)
(74) Representative: Wang, Bo
(86) International application number: PCT/CN2019/116608
(87) International publication number: WO 2021/008021

(56) References cited:
- EP-A1- 2 875 395
- EP-B1- 2 875 395
- WO-A1-2013/034523
- WO-A1-2014/185859
- CN-A- 101 153 992
- CN-A- 101 514 804
- CN-A- 101 514 804
- CN-A- 103 574 501
- CN-U- 206 191 344
- US-A1- 2010 061 087
- US-B2- 10 097 228

## Description

### CROSS-REFERENCE TO RELATED APPLICATIONS

This application claims priority of Chinese Application No. 201910640192.5, filed on July 16, 2019.

### TECHNICAL FIELD

The present disclosure generally relates to optical imaging technology, and more particularly, to lighting devices and optical devices using the same.

### BACKGROUND

Existing light sources for providing primary illumination or supplementary light for a camera usually use a single light-emitting chip or a plurality of such chips. The light-spot created by the existing light sources often deviates from a center of a field of view of the camera. In addition, the chromaticity and luminance of the light are often mixed unevenly. For example, the luminance of the light often jumps abruptly, and images taken by the camera are difficult to return. In addition, the light sources often bring in glare. Therefore, it is desired to provide lighting devices to solve and/or reduce the problems described above.
CN 101 514 804 A discloses a multi-chip encapsulated LED light source including a single light-emitting diode element and a concentrator element, the light-emitting diode element containing a plurality of light-emitting chips arranged in a square shape, and the concentrator element being a concentrator mirror compressing the fully scattered light emitted from the plurality of light-emitting chips into a small-angled emitted light.

### SUMMARY

The invention is set out in the appended set of claims.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1a is a perspective view of diagram illustrating an exemplary lighting device according to some embodiments of the present disclosure;
FIG. 1b is a cross-sectional view of an exemplary lighting device according to some embodiments of the present disclosure;
FIG. 2 is a diagram illustrating an exemplary light-source-pair according to some embodiments of the present disclosure;
FIG. 3a is a diagram illustrating an exemplary light source including two light-emitting chips according to some embodiments of the present disclosure;
FIG. 3b is a diagram illustrating an exemplary light source including three light-emitting chips according to some embodiments of the present disclosure;
FIG. 3c is a diagram illustrating an exemplary light source including four light-emitting chips according to some embodiments of the present disclosure;
FIG. 4a is a diagram illustrating an exemplary lens according to some embodiments of the present disclosure;
FIG.4b is a cross-sectional view of an exemplary lens according to some embodiments of the present disclosure;
FIG.4c is a cross-sectional view of an exemplary lens according to some embodiments of the present disclosure;
FIG. 5 is a top view of an exemplary light-exiting surface according to some embodiments of the present disclosure;
FIG. 6a is a schematic diagram of a light-spot formed by a light-emitting chip emitting red light of a first light source according to some embodiments of the present disclosure;
FIG. 6b is a schematic diagram of a light-spot formed by a light-emitting chip emitting red light of a second light source according to some embodiments of the present disclosure;
FIG. 6c is a schematic diagram of an overlapped light-spot of the first and the second light sources according to some embodiments of the present disclosure;
FIG. 7a is a graph illustrating an exemplary relationship between a light intensity and an angle between a light-emitting chip in a first light source and a connection between two light sources according to some embodiments of the present disclosure;
FIG. 7b is a graph illustrating an exemplary relationship between a light intensity and an angle between a light-emitting chip in a second light source and a connection between two light sources according to some embodiments of the present disclosure;
FIG. 7c is a graph illustrating an exemplary relationship between an overlapped light intensity and an angle between a light-emitting chip and a connection between two light sources according to some embodiments of the present disclosure;
FIG. 7d is a graph illustrating an exemplary relationship between an overlapped light intensity and an angle between a light-emitting chip and a connection between two light sources according to some embodiments of the present disclosure;
FIG. 8a is a schematic diagram illustrating an exemplary overlapping process of light emitted from four light-emitting chips according to some embodiments of the present disclosure;
FIG. 8b is a schematic diagram illustrating an exemplary overlapping process of light emitted from four light-emitting chips according to some embodiments of the present disclosure;
FIG. 9a is a diagram illustrating a light-spot and the corresponding compound eye structure (regular hexagons) according to some embodiments of the present disclosure;
FIG. 9b is a diagram illustrating a light-spot and the corresponding compound eye structure (irregular hexagons) according to some embodiments of the present disclosure; and
FIG . 10 is a schematic diagram illustrating an exemplary optical device according to some embodiments of the present disclosure.

### DETAILED DESCRIPTION

The following description is presented to enable any person skilled in the art to make and use the present disclosure, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown but is to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprises," "comprising," "includes," and/or "including" when used in this disclosure, specify the presence of stated features, integers, steps, operations, elements, and/or components, but do not preclude the presence or addition of one or more other features, integers, steps, operations, elements, components, and/or groups thereof.

These and other features, and characteristics of the present disclosure, as well as the methods of operations and functions of the related elements of structure and the combination of parts and economies of manufacture, may become more apparent upon consideration of the following description with reference to the accompanying drawing(s), all of which form part of this specification. It is to be expressly understood, however, that the drawing(s) is for the purpose of illustration and description only and are not intended to limit the scope of the present disclosure. It is understood that the drawings are not to scale.

The flowcharts used in the present disclosure illustrate operations that systems implement according to some embodiments of the present disclosure. It is to be expressly understood, the operations of the flowcharts may be implemented not in order. Conversely, the operations may be implemented in inverted order, or simultaneously. Moreover, one or more other operations may be added to the flowcharts. One or more operations may be removed from the flowcharts.

An aspect of the present disclosure relates to a lighting device for supplying light. In some embodiments, the lighting device is configured to optimize illumination for a camera. Such camera-assisting lighting devices would be used as examples in the present disclosure. However, it should be noted that the lighting devices of the present disclosure could be configured to be part of independent light sources or help to provide illumination for devices other than cameras. The lighting devices may mix light that is emitted from a plurality of light-emitting chips to form a light-spot at a center of a field of view of the camera. To this end, the plurality of light-emitting chips may form a plurality of complementary pairs. In each complementary pair, the same type of light-emitting chips that emit the same wavelength of light are centrally symmetric about the center of the complementary pair. The light that is emitted from the plurality of light-emitting chips passes through one or more lenses to focus the light at the center of the field of view of the camera. In some embodiments, the inner refracting surface and the outer reflecting surface of each of the one or more lenses are both freeform surfaces. In this way, the light-spot has the maximum light intensity. The chromaticity and luminance of the light can be mixed evenly. The luminance of the light is transitioned smoothly, and images taken from the camera may be well returned. In addition, the light-exiting surface of each of the one or more lenses has a compound eye structure. In this way, the light that is emitted from the plurality of light-emitting chips are shaped into an approximate circular light spot, and glare from the lighting device is reduced.

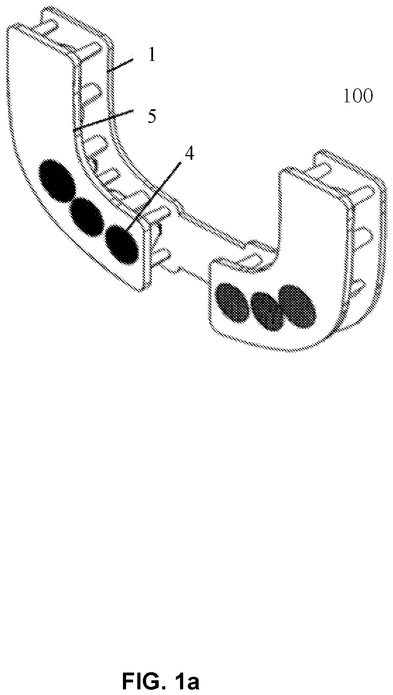

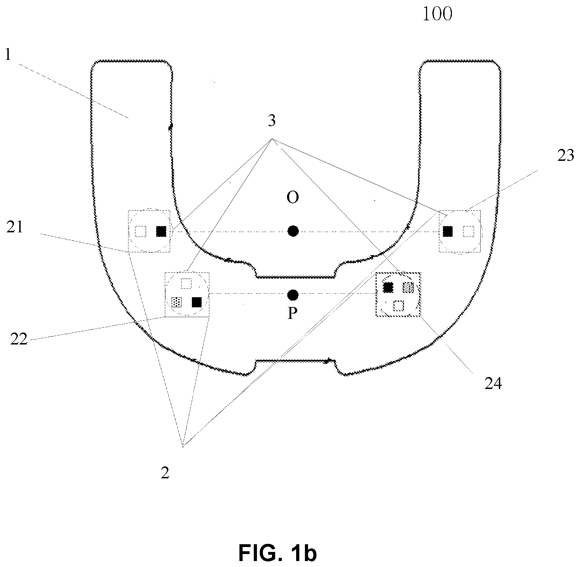

FIG. 1a is a perspective view of diagram illustrating an exemplary lighting device 100 according to some embodiments of the present disclosure. FIG. 1b is a cross-sectional (section parallel to first board 1) view of an exemplary lighting device 100 according to some embodiments of the present disclosure. As shown in FIG. 1a, the lighting device 100 includes a first board 1 and a second board 5. In some embodiments, the second board 5 may be opposite to the first board 1.

In some embodiments, the first board 1 may be a supporting plate of the lighting device 100. In some embodiments, the first board 1 may have a symmetrical structure. As shown in FIG. 1a and FIG. 1b, the first board 1 has a U-shape or a similar U-shape. In some embodiments, the first board 1 may have an asymmetrical structure. In some embodiments, the first board 1 may be made of any suitable materials, such as aluminum, copper, silver, or the like, or any combination thereof.

In FIG. 1b, a plurality of light-source-pairs is disposed on the first board 1 and includes a plurality of light sources 2 to emit light. In some embodiments, the lighting device 100 may include an even number of light sources disposed on the first board 1. For example, the lighting device 100 may include two light sources, four light sources, six light sources, eight light sources, etc. In embodiments, each light-source-pair includes two light sources 2 and the two light sources 2 of each light-source-pair are symmetric about a center of the first board 1. In some embodiments, the plurality of light-source-pairs and the first board 1 may be integrally-formed. For example, the plurality of light-source-pairs may be modeled in one body with the first board 1. In some embodiments, the plurality of light-source-pairs may be two or more separate modules. For example, the plurality of light-source-pairs may be mounted on the first board 1 according to one or more connectors. The one or more connectors may include a matching slot, a glue, a bolt, or the like, or any combination thereof.

In embodiments, each light source 2 of a light-source-pair includes at least two types of light-emitting chips 3. Each type of light-emitting chip 3 may emit light that has the same or highly similar wavelength. For example, the at least two types of light-emitting chips 3 may emit red light, green light, blue light, infrared light, or the like, or any combination thereof. In some embodiments, a count of light-emitting chips 3 of each light source 2 may not be limited. For example, each light source 2 may include two light-emitting chips 3, three light-emitting chips 3, four light-emitting chips 3, five light-emitting chips 3, etc.

In some embodiments, every two light-emitting chips of the same type in the two light sources of a light-source-pair may be centrally symmetric about a center of the two light sources. For example, as shown in FIG. 1b, four light sources 21, 22, 23, and 24 are disposed on the first board 1 of the lighting device 100. The light source 21 and the light source 23 form a first light-source-pair, and the light source 22 and the light source 24 forms a second light-source-pair. The light source 21 and the light source 23 include two light-emitting chips 3, respectively. As shown in FIG. 1b, blocks with same patterns represent the same type of light-emitting chips that emits the same wavelength of light. Two hollow blocks (or two black solid blocks) representing the same type of light-emitting chips of the light source 21 and the light source 23 of the first light-source-pair are centrally symmetric about a center O of the two light sources. Two hollow blocks (or two black solid blocks, or two texture-filled blocks) representing the same type of light-emitting chips of the light source 22 and the light source 24 of the second light-source-pair are centrally symmetric about a center P of the two light sources. It should be noted that in the present disclosure if one of two light-emitting chips is the same as the other of the two light-emitting chips after rotating up to 180 degrees around a point, the two light-emitting chips are centrally symmetric about the point.

In some embodiments, every two light-emitting chips of a light-source-pair that are centrally symmetric about a center of the two light sources may form a complementary source for emitting light. The centrally symmetric arrangement may ensure that the maximum light intensity is at a center of a field of view of a camera that needs supplementary light, and a projected isophot diagram of the camera may be axisymmetric.

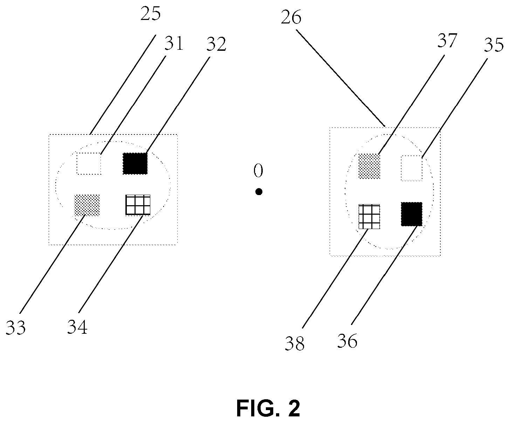

FIG. 2 is a diagram illustrating an exemplary light-source-pair according to some embodiments of the present disclosure. In embodiments, every two light-emitting chips of the same type in the two light sources of a light-source-pair are rotationally symmetric about a center of the two light sources. For example, as shown in FIG. 2, a light source 25 and a light source 26 may be a light-source-pair of the lighting device 100. The light source 25 may include four types of light-emitting chips: a light-emitting chip 31, a light-emitting chip 32, a light-emitting chip 33, and a light-emitting chip 34. The light source 26 may include four same types of light-emitting chips: a light-emitting chip 35, a light-emitting chip 36, a light-emitting chip 37, and a light-emitting chip 38. The four light-emitting chips in the light source 25 and the light source 26 of the light-source-pair may be 90° rotationally symmetric about the center O of the light source 25 and the light source 26. It should be noted that in the present disclosure if one of two light-emitting chips is the same as the other of the two light-emitting chips after rotating up to 90 degrees (either clockwise or anticlockwise) around a point, the two light-emitting chips may be 90° rotationally symmetric about the point. As shown in FIG. 2, the light-emitting chip 31 is the same as the light-emitting chip 35 after rotating up to 90 degrees around the center O of the light source 25 and the light source 26. The light-emitting chip 32 is the same as the light-emitting chip 36 after rotating up to 90 degrees around the center O of the light source 25 and the light source 26. the light-emitting chip 33 is the same as the light-emitting chip 37 after rotating up to 90 degrees around the center O of the light source 25 and the light source 26. the light-emitting chip 34 is the same as the light-emitting chip 38 after rotating up to 90 degrees around the center O of the light source 25 and the light source 26. In some embodiments, the 90° rotationally symmetric arrangement of four types of light-emitting chips may increase an area on which the chromaticity of the light is mixed evenly.

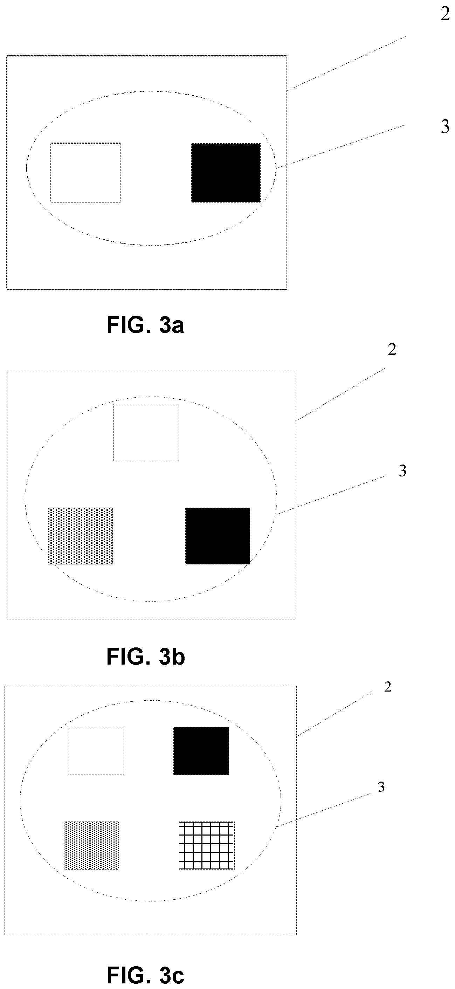

FIG. 3a is a diagram illustrating an exemplary light source 2 including two light-emitting chips according to some embodiments of the present disclosure. FIG. 3b is a diagram illustrating an exemplary light source 2 including three light-emitting chips according to some embodiments of the present disclosure. FIG. 3c is a diagram illustrating an exemplary light source 2 including four light-emitting chips according to some embodiments of the present disclosure.

In some embodiments, the at least two types of light-emitting chips 3 on each light source 2 may be arranged in different layouts. For example, as shown in FIG. 3a, the at least two types of light-emitting chips 3 of the light source 2 may be arranged in a line on the surface of the light source 2. As another example, as shown in FIG. 3b, the at least two types of light-emitting chips 3 of the light source 2 may include three light-emitting chips 3 forming a layout of an equilateral triangle on the surface of the light source 2. As another example, as shown in FIG. 3c, the at least two types of light-emitting chips 3 of the light source 2 may include four light-emitting chips 3 arranged in two rows and two columns on the surface of the light source 2. The four light-emitting chips 3 may be aligned at four quadrants of a cross, respectively.

It should be noted that FIGs. 3a-3c are merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, the light source 2 may include more than two light-emitting chips 3 arranged in a line. As another example, the light source 2 may include at least two types of light-emitting chips 3 forming a layout of a regular polygon.

Referring back to FIG. 1a, in a light-exiting direction of the lighting device 100, the lighting device 100 may further include the second board 5 opposite to the first board 1. In other words, the second board 5 may be parallel to the first board 1 and the light chips disposed on the first board 1 may be facing the direction of the second board 5. The second board 5 may be a supporting plate of optical elements. The optical elements may be configured to mix light emitted from the plurality of light-source-pairs of the first board 1. In some embodiments, the second board 5 may have the same shape as the first board 1. For example, the second board 5 may be the same size as the first board 1. In some embodiments, the second board 5 may have a different shape from the first board 1. For example, as shown in FIG. 1a, the first board 1 has a U-shape, and the second board 5 has two semi-U-shape structures. In some embodiments, the second board 5 may be made up of any suitable materials, such as aluminum, copper, silver, or the like, or any combination thereof. In some embodiments, the second board 5 may be made up of the same material as the first board 1, or may be made up of different materials from the first board 1.

In some embodiments, the optical elements may be one or more lenses 4 configured to mix light emitted from the plurality of light-source-pairs. As shown in FIG. 1a, the one or more lenses 4 may be disposed on on a side of the second board 5 that is closer to the first board 1. In some embodiments, the one or more lenses may be one lens in the light-exiting direction of the lighting device 100. The light emitted from the plurality of light-emitting chips may pass through the lens and be mixed to form a light-spot. The center of the light-spot may be overlapped with a center of a field of view of a camera. In some embodiments, the one or more lenses may be a plurality lenses. For example, a count of the light sources 2 on the first board 1 may be the same as a count of the plurality of lenses on the second board 5. In some embodiments, the plurality of lenses may bear a one-to-one relationship with the light sources 2. For example, each of the plurality of lenses may be in the light-exiting direction of a light source. In some embodiments, parameters (e.g., a focal length, a radius of curvature, a thickness, etc.) of each of the plurality of lenses may be the same or different. For example, all of the plurality of lenses may be the same. As another example, two lenses that are in the light-exiting directions of two light sources of a light-source-pair may be the same. For example, a lens corresponding to the light source 21 may be the same as a lens corresponding to the light source 23 of the same light-source-pair.

In some embodiments, the one or more lenses and the second board 5 may be integrally-formed. For example, the one or more lenses may be modeled in one body with the second board 5. In some embodiments, the one or more lenses may be two or more separate modules. For example, the one more lenses may be mounted on the second board 5 according to one or more connectors. The one or more connectors may include a matching slot, a glue, a bolt, or the like, or any combination thereof.

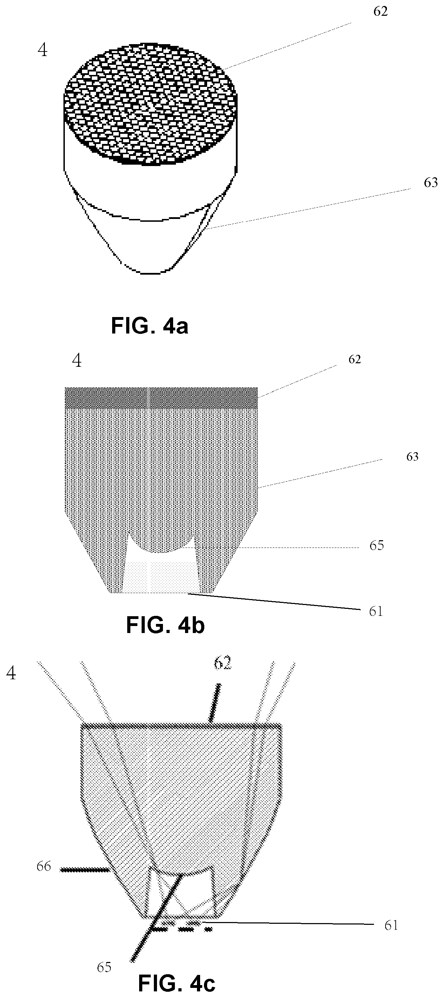

FIG. 4a is a diagram illustrating an exemplary lens 4 according to some embodiments of the present disclosure. FIG.4b is a cross-sectional view of an exemplary lens 4 according to some embodiments of the present disclosure. FIG.4c is a cross-sectional view of an exemplary lens 4 according to some embodiments of the present disclosure.

As shown in FIG. 4a, FIG. 4b, and FIG. 4c, the lens 4 may have an incident surface 61, a light-exiting surface 62, and a side surface 63. In some embodiments, the incident surface 61 may be opposite to the corresponding light source and close to the corresponding light source. In some embodiments, the light-exiting surface 62 may be opposite to the corresponding light source and away from the corresponding light source. In some embodiments, the incident surface 61 and/or the light-exiting surface 62 and/or the side surface 63 may be a flat surface, a curved surface (e.g., a freeform surface), a spherical surface, or the like, or any combination thereof.

In some embodiments, as shown in FIG. 4c, the lens 4 may have an inner refracting surface 65 and an outer reflecting surface 66. The light emitted from the plurality of light-source-pairs may first enter into each of the one or more lenses from the incident surface 61, then refract at the inner refracting surface 65 or reflect at the outer reflecting surface 66, and finally get out from the light-exiting surface 62. In some embodiments, the outer reflecting surface 66 may be a part of an inner surface of the side surface 63. In some embodiments, the inner refracting surface 65 and/or the outer reflecting surface 66 may be a freeform surface. In some embodiments, parameters (e.g., a form. a degree, a pole, a count of knots, etc.) of the freeform surface of the inner refracting surface 65 and/or the outer reflecting surface 66 may be determined according to different application scenes. For example, the parameters of the freeform surface of the inner refracting surface 65 and/or the outer reflecting surface 66 may be determined based on the luminance characteristics of the corresponding light source. As another example, the parameters of the freeform surface of the inner refracting surface 65 and/or the outer reflecting surface 66 may be determined based on luminance of the light at the corresponding surface. It should be noted that the term "freeform surface" may denote those surface shapes which"cannot be continuously generated"and have an arbitrary character of forms traditionally modeled by sculptors. The freeform surface may be composed of asymmetric, irregular and complex surfaces.

In some embodiments, the freeform surface of the inner refracting surface 65 and/or the outer reflecting surface 66 of each of the one or more lenses of the lighting device may ensure that the chromaticity and luminance of the light are mixed evenly. The freeform surface may also ensure that the luminance of the light is transitioned smoothly.

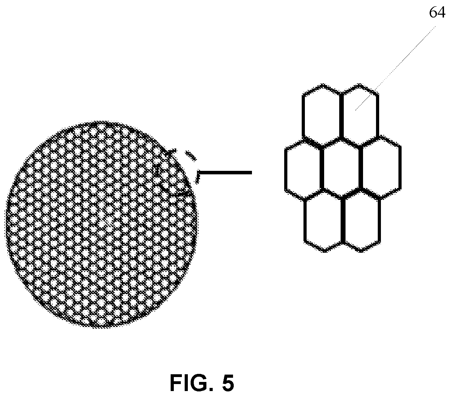

FIG. 5 is a top view of an exemplary light-exiting surface according to some embodiments of the present disclosure. In some embodiments, as shown in FIG. 5, the light-exiting surface 62 may be designed with a compound eye structure. In some embodiments, the compound eye structure may include a plurality of eyes 64 (e.g., dragonfly eyes, fly eyes, etc.). For example, the compound eye structure may include a plurality of regular polygon (e.g., regular hexagons, regular octagon, etc.). As another example, the compound eye structure 64 may include a plurality of irregular polygon (e.g., irregular hexagons, irregular octagon, etc.). As still another example, the compound eye structure 64 may include a plurality of irregular polygon and a plurality of regular polygon. In some embodiment, the shape of polygons of the compound eye structure may be determined based on a luminous angle of the lighting device 100, a radius of curvature of the lighting device 100, a luminous aperture of the lighting device 100, or the like, or any combination thereof.

In some embodiments, the compound eye structure of the light-exiting surface 62 may reduce glare from the lighting device. The light that is emitted from the plurality of light-emitting chips may be shaped into an approximate circular light spot using the compound eye structure.

In order to shown uniform light mixing performance, each light source of a light-source-pair including two light-emitting chips may be taken for example. For example, each light source of the light-source-pair including two light-emitting chips emits red light and green light, respectively. The two light-emitting chips emitting the same type of light (the red light or the green light) may be centrally symmetric about a center of the two light sources.

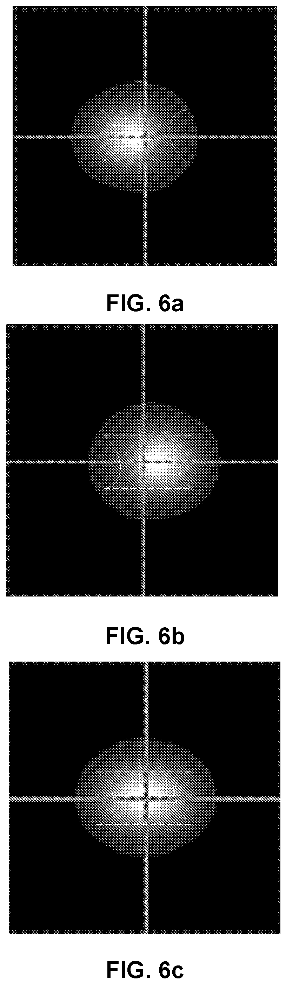

FIG. 6a is a schematic diagram of a light-spot formed by a light-emitting chip emitting red light of a first light source according to some embodiments of the present disclosure. FIG. 6b is a schematic diagram of a light-spot formed by a light-emitting chip emitting red light of a second light source according to some embodiments of the present disclosure. FIG. 6c is a schematic diagram of an overlapped light-spot of the first and the second light sources according to some embodiments of the present disclosure. As shown in FIG. 6a, FIG. 6b, and FIG. 6c, the dotted box may represent a light-spot. The centrally symmetric layout of the same type of two light-emitting chips about the center of the two light sources (the first and the second light source) makes that the center of the light-spot is overlapped with a center of connection between two light sources.

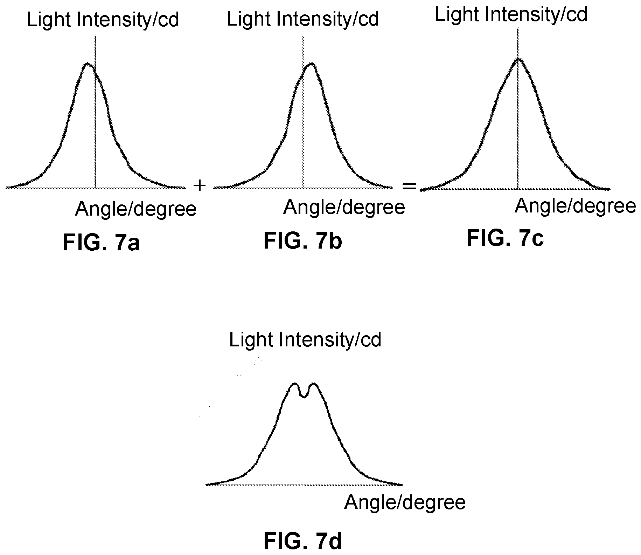

FIG. 7a is a graph illustrating an exemplary relationship between a light intensity and an angle between a light-emitting chip in a first light source and a connection between two light sources according to some embodiments of the present disclosure. FIG. 7b is a graph illustrating an exemplary relationship between a light intensity and an angle between a light-emitting chip in a second light source and a connection between two light sources according to some embodiments of the present disclosure. FIG. 7c is a graph illustrating an exemplary relationship between an overlapped light intensity and an angle between a light-emitting chip and a connection between two light sources according to some embodiments of the present disclosure. FIG. 7d is a graph illustrating an exemplary relationship between an overlapped light intensity and an angle between a light-emitting chip and a connection between two light sources according to some embodiments of the present disclosure.

As shown in FIG. 7a, FIG. 7b, FIG. 7c, and FIG. 7d, the vertical axis may represent a light intensity (candela(cd), or mW/sr), the horizontal axis may represent an angle (degree) between the light-emitting chip and the connection between two light sources. The intersection Q between the vertical axis and the horizontal axis may be a projection of the center of the connection between two light sources.

As shown in FIG. 7a and FIG. 7b, any one light-emitting chip of a single light source of a light-source-pair may emit different intensities of light at different positions. The maximum intensity is closer to a center of connection between two light sources (or the light-source-pair) and deviated from the center. Due to the centrally symmetric layout of the same type of two light-emitting chips about the center of the two light sources, the light emitted from the same type of two light-emitting chips may be overlapped. The maximum light intensity appears at the center of the connection between two light sources (or the light-source-pair). However, in some embodiments, when overlapping light emitted from two light-emitting chips emitting the red light, as shown in FIG. 7d, the light intensity (or the luminance of the light) jumps abruptly at the center. The overlapped light at the center is not the maximum. In order to make the luminance of the light transition smoothly, the lighting device 100 may further include a lens in the light-exiting direction of each light source. When passing through the lens, part of the overlapped light is reflected at the outer reflecting surface, and part of the overlapped light is refracted at the inner refracting surface of the lens. The overlapped light jumps abruptly at the center may be revised. As shown in FIG. 7c, the light intensity (or luminance) may be the maximum at the center.

As another example, each light source of the light-source-pair including four light-emitting chips emits red light, green light, blue light, and infrared light, respectively. The four light-emitting chips are arranged in two rows and two columns and aligned at four quadrants of a cross as shown in FIG. 2.

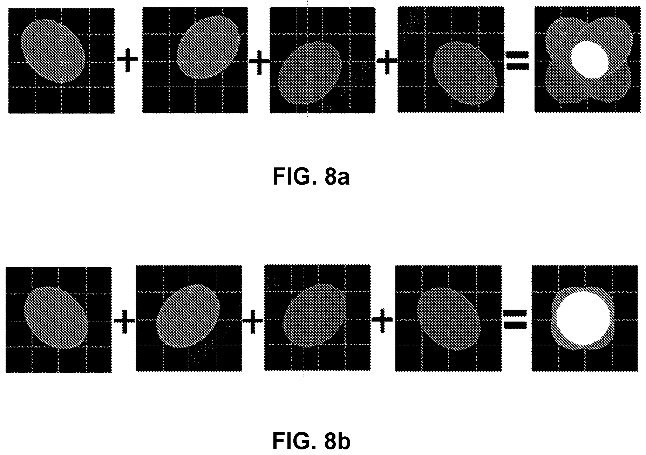

FIG. 8a is a schematic diagram illustrating an exemplary overlapping process of light emitted from four light-emitting chips according to some embodiments of the present disclosure. In some embodiments, every two light-emitting chips of a same type in the two light sources of a light-source-pair are not centrally symmetric about a center of the two light sources. As shown in FIG. 8a, the overlapped light of four different types of light-emitting chips forms a divergent light spot.

FIG. 8b is a schematic diagram illustrating an exemplary overlapping process of light emitted from four light-emitting chips according to some embodiments of the present disclosure. In some embodiments, every two light-emitting chips of a same type in the two light sources of a light-source-pair are ncentrally symmetric about a center of the two light sources. As shown in FIG. 8b, different types of light emitted from the four light-emitting chips may be overlapped to form a converging light-spot. The light intensity is the maximum at the center, and the converging light-spot is the largest in area.

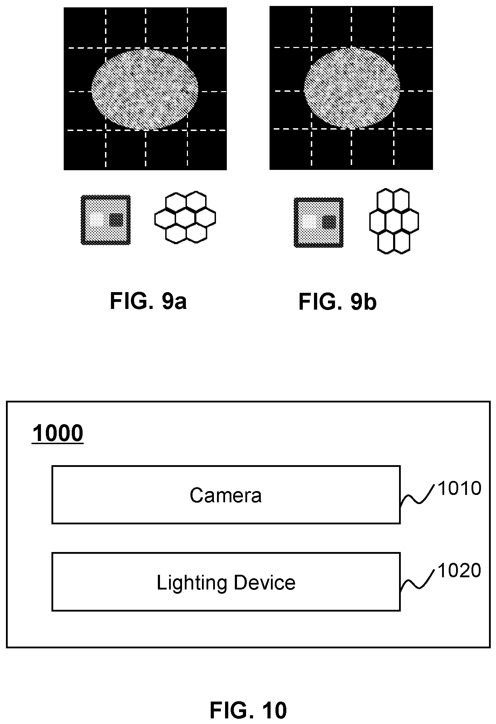

FIG. 9a is a diagram illustrating a light-spot and the corresponding compound eye structure (regular hexagons) according to some embodiments of the present disclosure. FIG. 9b is a diagram illustrating a light-spot and the corresponding compound eye structure (irregular hexagons) according to some embodiments of the present disclosure.

As shown in FIG. 9a and FIG. 9b, the light spot corresponding to a compound eye structure including a plurality of irregular hexagons tends to be a circular spot, and the light spot corresponding to a compound eye structure including a plurality of regular hexagons tends to be an elliptical spot. In some embodiments, the light spot corresponding to a compound eye structure including a plurality of irregular hexagons is closer to a circular spot than the light spot corresponding to a compound eye structure including a plurality of regular hexagons. On the other hand, in some embodiments, the light spot corresponding to a compound eye structure including a plurality of regular hexagons is more elliptical than the light spot corresponding to a compound eye structure including a plurality of irregular hexagons. The compound eye structure including a plurality of irregular hexagons may be used for a light source including two light-emitting chips.

FIG.10 is a schematic diagram illustrating an exemplary optical device 1000 according to some embodiments of the present disclosure. As shown in FIG. 10, the optical device may include a camera 1010 and a lighting device 1020. In some embodiments, the lighting device 1020 may be any lighting device according to the present disclosure. The lighting device 1020 may provide supplementary light for the camera 1010. In some embodiments, a center of a light-spot of the lighting device 1020 may be overlapped with a center of a field of view of the camera 1010.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. Furthermore, the particular features, structures or characteristics may be combined as suitable in one or more embodiments of the present disclosure.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, the numbers expressing quantities or properties used to describe and claim certain embodiments of the application are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

## Claims

1. A lighting device comprising:
a first board (1), wherein the first board has a U-shape;
a plurality of light-source-pairs (21, 22, 23, 24) disposed on the first board, each light-source-pair includes two light sources, wherein
each light source of a light-source-pair includes at least two types of light-emitting chips (31, 32, ,33, 34, 35, 36, 37, 38) for emitting different wavelengths of light, and
every two light-emitting chips (31, 32, 33, 34, 35, 36, 37, 38) of a same type in the two light sources of
a light-source-pair are centrally symmetric about a center of the two light sources; and
one or more lenses (4) configured to mix light emitted from the plurality of light-source-pairs to form a light-spot.

2. The lighting device of claim 1, wherein each of the one or more lenses (4) has an inner refracting surface (65); which is a freeform surface.

3. The lighting device of claim 1 or 2, wherein each of the one or more lenses has an outer reflecting surface (66), which is a freeform surface.

4. The lighting device of any one of claims 1-3, wherein each of the one or more lenses has a light-exiting surface (62), and the light-exiting surface is designed with a compound eye structure.

5. The lighting device of claim 1, wherein the two light sources of a light-source-pair (21, 22, 23, 24) are symmetric about a center of the first board.

6. The lighting device of any one of claims 1-5, wherein the at least two types of light-emitting chips (31, 32, ,33, 34, 35, 36, 37, 38)
of a light source includes more than two types of light-emitting chips of a light source, wherein the more than two types of light-emitting chips of a light source are arranged in a line.

7. The lighting device of any one of claims 1-5, wherein the at least two types of light-emitting chips (31, 32, ,33, 34, 35, 36, 37, 38)
of a light source include four light-emitting chips arranged in two rows and two columns.

8. The lighting device of any one of claims 1-5, wherein the at least two types of light-emitting chips (31, 32, ,33, 34, 35, 36, 37, 38)
of a light source include three light-emitting chips forming a layout of an equilateral triangle.

9. The lighting device of any one of claims 1-8, wherein each of the one of more lenses (4)
is in a light-exiting direction of a light source, and two lenses that are in the light-exiting directions of two light sources of a light-source-pair are the same.

10. The lighting device of any one of claims 1-9, wherein a center of the light-spot is overlapped with a center of a field of view of a camera.

11. The lighting device of any one of claims 1-10, further comprising a second board (5) opposite to the first board (1); wherein the one or more lenses (4) are disposed on a side of the second board that is closer to the first board.

12. The lighting device of claim 11, wherein the one or more lenses (4) and the second board (5) are integrally-formed.

13. An optical device comprising:
a camera; and
a lighting device of any one of claims 1-12.

## Patentansprüche

1. Beleuchtungsvorrichtung, umfassend:
eine erste Platine (1), wobei die erste Platine eine U-Form aufweist;
eine Vielzahl von Lichtquellenpaaren (21, 22, 23, 24), die auf der ersten Platine angeordnet sind, wobei jedes Lichtquellenpaar zwei Lichtquellen beinhaltet, wobei
jede Lichtquelle eines Lichtquellenpaares mindestens zwei Arten von Licht emittierenden Chips (31, 32, 33, 34, 35, 36, 37, 38) zum Emittieren von Licht unterschiedlicher Wellenlängen umfasst, und
jeder zweite Licht emittierende Chip (31, 32, 33, 34, 35, 36, 37, 38) einer gleichen Art in den beiden Lichtquellen eines Lichtquellenpaares zentralsymmetrisch um einen Mittelpunkt der beiden Lichtquellen angeordnet sind; und
eine oder mehrere Linsen (4), die konfiguriert sind, um das von der Vielzahl von Lichtquellenpaaren emittierte Licht zu mischen, um einen Lichtfleck zu bilden.

2. Beleuchtungsvorrichtung nach Anspruch 1, wobei jede der einen oder mehreren Linsen (4) eine innere brechende Oberfläche (65) aufweist; die eine Freiformoberfläche ist.

3. Beleuchtungsvorrichtung nach Anspruch 1 oder 2, wobei jede der einen oder mehreren Linsen eine äußere reflektierende Oberfläche (66) aufweist, die eine Freiformoberfläche ist.

4. Beleuchtungsvorrichtung nach einem der Ansprüche 1-3, wobei jede der einen oder mehreren Linsen eine Lichtaustrittsoberfläche (62) aufweist und die Lichtaustrittsoberfläche mit einer Facettenaugenstruktur gestaltet ist.

5. Beleuchtungsvorrichtung nach Anspruch 1, wobei die beiden Lichtquellen eines Lichtquellenpaares (21, 22, 23, 24) symmetrisch um einen Mittelpunkt der ersten Platine angeordnet sind.

6. Beleuchtungsvorrichtung nach einem der Ansprüche 1-5, wobei die mindestens zwei Arten von Licht emittierenden Chips (31, 32, 33, 34, 35, 36, 37, 38) einer Lichtquelle mehr als zwei Arten von Licht emittierenden Chips einer Lichtquelle beinhalten, wobei die mehr als zwei Arten von Licht emittierenden Chips einer Lichtquelle in einer Reihe angeordnet sind.

7. Beleuchtungsvorrichtung nach einem der Ansprüche 1-5, wobei die mindestens zwei Arten von Licht emittierenden Chips (31, 32, 33, 34, 35, 36, 37, 38) einer Lichtquelle vier Licht emittierende Chips umfassen, die in zwei Reihen und zwei Spalten angeordnet sind.

8. Beleuchtungsvorrichtung nach einem der Ansprüche 1-5, wobei die mindestens zwei Arten von Licht emittierenden Chips (31, 32, 33, 34, 35, 36, 37, 38) einer Lichtquelle drei Licht emittierende Chips umfassen, die einen Aufbau eines gleichseitigen Dreiecks bilden.

9. Beleuchtungsvorrichtung nach einem der Ansprüche 1-8, wobei sich jede der einen oder mehreren Linsen (4) in einer Lichtaustrittsrichtung einer Lichtquelle befindet und zwei Linsen, die sich in der Lichtaustrittsrichtung zweier Lichtquellen eines Lichtquellenpaares befinden, gleich sind.

10. Beleuchtungsvorrichtung nach einem der Ansprüche 1-9, wobei ein Mittelpunkt des Lichtflecks mit dem Mittelpunkt des Sichtfelds einer Kamera überlappt ist.

11. Beleuchtungsvorrichtung nach einem der Ansprüche 1-10, weiter umfassend eine zweite Platine (5) gegenüber der ersten Platine (1); wobei
die eine oder mehrere Linsen (4) auf einer Seite der zweiten Platine angeordnet sind, die näher an der ersten Platine liegt.

12. Beleuchtungsvorrichtung nach Anspruch 11, wobei die eine oder mehrere Linsen (4) und die zweite Platine (5) in einem Stück gebildet sind.

13. Optische Vorrichtung, umfassend:
eine Kamera; und
eine Beleuchtungsvorrichtung nach einem der Ansprüche 1-12.

## Revendications

1. Dispositif d'éclairage comprenant :
une première carte (1), dans lequel la première carte présentant une forme en U ;
une pluralité de paires de sources lumineuses (21, 22, 23, 24) agencées sur la première carte, chaque paire de sources de lumière inclut deux sources de lumière, dans lequel
chaque source de lumière d'une paire de sources de lumière inclut au moins deux types de puces émettrices de lumière (31, 32, 33, 34, 35, 36, 37, 38) pour émettre différentes longueurs d'onde de lumière, et
dans les deux sources de lumière d'une paire de sources de lumière, chaque paire de puces émettrices de lumière (31, 32, 33, 34, 35, 36, 37, 38) de même type présente une symétrie centrale autour du centre des deux sources de lumière ; et
une ou plusieurs lentilles (4) configurées pour mélanger la lumière émise par la pluralité de paires de sources de lumière afin de former un point lumineux.

2. Dispositif d'éclairage selon la revendication 1, dans lequel chacune des une ou plusieurs lentilles (4) présente une surface réfractrice interne (65), qui est une surface de forme libre.

3. Dispositif d'éclairage selon la revendication 1 ou 2, dans lequel chacune des lentilles présente une surface réfléchissante externe (66), qui est une surface de forme libre.

4. Dispositif d'éclairage selon l'une quelconque des revendications 1-3, dans lequel chacune des une ou plusieurs lentilles présente une surface de sortie de lumière (62), et la surface de sortie de lumière est conçue avec une structure d'yeux composés.

5. Dispositif d'éclairage selon la revendication 1, dans lequel les deux sources de lumière d'une paire de sources de lumière (21, 22, 23, 24) sont symétriques par rapport à un centre de la première carte.

6. Dispositif d'éclairage selon l'une quelconque des revendications 1-5, dans lequel les au moins deux types de puces émettrices de lumière (31, 32, 33, 34, 35, 36, 37, 38) d'une source de lumière incluent plus de deux types de puces émettrices de lumière d'une source de lumière, dans lequel les plus de deux types de puces émettrices de lumière d'une source de lumière sont agencés en ligne.

7. Dispositif d'éclairage selon l'une quelconque des revendications 1-5, dans lequel les au moins deux types de puces émettrices de lumière (31, 32, 33, 34, 35, 36, 37, 38) d'une source de lumière incluent quatre puces émettrices de lumière agencées en deux rangées et deux colonnes.

8. Dispositif d'éclairage selon l'une quelconque des revendications 1-5, dans lequel les au moins deux types de puces émettrices de lumière (31, 32, 33, 34, 35, 36, 37, 38) d'une source de lumière incluent trois puces émettrices de lumière formant une disposition en triangle équilatéral.

9. Dispositif d'éclairage selon l'une quelconque des revendications 1-8, dans lequel chacune des une ou plusieurs lentilles (4) est dans une direction de sortie de lumière d'une source de lumière, et deux lentilles qui sont dans les directions de sortie de lumière de deux sources de lumière d'une paire de sources de lumière sont les mêmes.

10. Dispositif d'éclairage selon l'une quelconque des revendications 1-9, dans lequel un centre du point lumineux est chevauché par un centre d'un champ de vision d'une caméra.

11. Dispositif d'éclairage selon l'une quelconque des revendications 1-10, comprenant en outre une seconde carte (5) opposée à la première carte (1) ; dans lequel
les une ou plusieurs lentilles (4) sont disposées d'un côté de la seconde carte qui est plus proche de la première carte.

12. Dispositif d'éclairage selon la revendication 11, dans lequel les une ou plusieurs lentilles (4) et la seconde carte (5) sont formées d'un seul tenant.

13. Dispositif optique comprenant :
une caméra ; et
un dispositif d'éclairage selon l'une quelconque des revendications 1-12.
